Europäisches Patentamt

European Patent Office

Office européen des brevets

(11) Veröffentlichungsnummer: **0 507 219 A2**

# (12) EUROPÄISCHE PATENTANMELDUNG

(21) Anmeldenummer: **92105296.5**

(22) Anmeldetag: **27.03.92**

(51) Int. Cl.5: **B24B 27/06**

(30) Priorität: **30.03.91 DE 4110498**

(43) Veröffentlichungstag der Anmeldung:
**07.10.92 Patentblatt 92/41**

(84) Benannte Vertragsstaaten:
**AT BE DE FR GB IT NL SE**

(71) Anmelder: **HOESTEMBERGHE & KLÜTSCH GmbH**
**Industriestrasse**
**W-6630 Saarlouis(DE)**

(72) Erfinder: **Rastetter, Emil, Ing.**
**Marxstrasse 21**
**W-6653 Niederwürzbach(DE)**
Erfinder: **Oberhauser, Ernst-Günther**
**Kahler Allee 34**
**W-6670 St. Ingbert(DE)**

(74) Vertreter: **Vièl, Georg, Dipl.-Ing.**
**Patentanwalt Weinbergweg 15**
**W-6600 Saarbrücken(DE)**

(54) **Trennschleifmaschine zum Trennen von Blechen.**

(57) Trennschleifmaschinen zum Trennen von Blechen sind bisher nur als Handgeräte bekannt, mit denen ein rechtwinkliges und längengenaues Trennen von Blechen kaum möglich ist.

Insbesondere zum Trennen von thermisch behandelten, hochfesten und verschleißfesten Grobblechen wurde eine Trennschleifmaschine entwickelt, die im wesentlichen aus einem stabilen Gerüst, in dem ein Verfahrwagen mit einer auf einer Schwinge angebrachten Schneideinheit vorgesehen ist, besteht. Um die Schneideinheit und die Trennstelle ist ein Schleifraumschutzkasten angeordnet, an dem Einrichtungen zum Entsorgen des Staubes und der Gratstücke vorgesehen sind. Das zu schneidende Gut wird durch Niederhalterstempel und Niederhalterbalken festgehalten.

Mit dieser Trennschleifmaschine ist ein rechtwinkliges, gratfreies und längengenaues Trennen auch thermisch behandelter Bleche großer Dimensionen möglich.

Fig. 1

Die Erfindung betrifft eine Trennschleifmaschine zum Trennen von Blechen.

Bleche werden bisher beispielsweise mit Handtrennschleifgeräten getrennt. Diese Geräte sind vor allem geeignet, um nicht thermisch behandelte Bleche von einigen Millimetern Dicke zu trennen. Ein rechtwinkliger und längengenauer Schnitt kann damit jedoch nicht erzielt werden, sondern es handelt sich um ein grobes Zuschneiden. Zum Trennen thermisch behandelter hochfester und verschleißfester Grobbleche ist keine Trennschleifmaschine bekannt.

Es ist bekannt, Grobbleche durch Brennschneiden zu trennen. Diese Arbeitsweise hat aber mehrere Nachteile, insbesondere sind in jeder Hinsicht die dabei entstehende Rauchentwicklung und der beträchtliche Geräuschpegel störend, der Abfall ist relativ groß und ein exaktes Schneiden hochfester und verschleißfester Grobbleche ist so nicht möglich.

Weiterhin sind auch Scheren zum Trennen von Blechen bekannt, bei denen jedoch die Verformung an der Schnittstelle und eine nicht ganz saubere Schnittfläche nachteilhaft sind. Scheren sind nicht zum Trennen hochfester Bleche geeignet.

Aufgabe der Erfindung ist es somit, eine Trennschleifmaschine zu entwickeln, mit der Bleche, insbesondere thermisch behandelte hochfeste und verschleißfeste Grobbleche gratfrei, rechtwinklig und längengenau zugeschnitten werden können.

Diese Aufgabe wird erfindungsgemäß dadurch gelöst, daß in einem Trägergerüst eine Verfahreinrichtung über dem zu trennenden Material hängend, in spielfrei einstellbaren Längsführungen laufend und über einen regelbaren Fahrantrieb antreibbar vorgesehen ist, daß die Verfahreinrichtung eine Trennblattabsenkvorrichtung aufweist, auf der eine regelbare Trennblattantriebseinheit vorgesehen ist, daß auf der Abtriebswelle der Trennblattantriebseinheit eine Trennblattklemmvorrichtung angeordnet ist, daß ein das Trennblatt und das zu trennende Material entlang und unterhalb der Trennstelle umfassender Schleifraumschutzkasten mit Entstaubungs- und Gratsammelvorrichtungen vorhanden ist, und daß Vorrichtungen zum Klemmen des zu trennenden Materials vorgesehen sind.

Eine Ausbildung der Erfindung ist dadurch gekennzeichnet, daß in einem schwingungsarmen Trägergerüst ein Verfahrwagen über dem zu trennenden Material hängend, mit über schwenkbare Vorspannkeile spielfrei einstellbaren Rollenumlaufschuhen in gehärteten und geschliffenen Längsführungen laufend und über einen Kugelgewindeantrieb antreibbar angeordnet ist, wobei das Festlager auf der Trennblattseite angeordnet ist, daß der Verfahrwagen eine spielfrei gelagerte Schwinge aufweist, auf der eine mit einem Getriebe verbundene Antriebseinheit mit einer schwingungsdämpfenden Kupplung vorgesehen ist, daß auf der Abtriebswelle des Getriebes eine Trennblattklemmvorrichtung angeordnet ist, daß ein das Trennblatt und das zu trennende Material entlang und unterhalb der Trennstelle umfassender Schleifraumschutzkasten mit Entstaubungsvorrichtungen und aushebbaren Gratstücksammelrosten vorhanden ist, und daß Vorrichtungen zum Niederhalten des zu trennenden Materials vorgesehen sind.

Eine Weiterbildung der Erfindung ist es, daß die Kugelspindel des Kugelgewindeantriebs mit einem Radialkolbenmotor mit hydraulischer Steuerung antreibbar ist.

Es ist auch sinnvoll, daß als Antriebseinheit ein über einen Stromrichter regelbarer Gleichstrommotor vorgesehen ist.

Weiterhin liegt es im Rahmen der Erfindung, daß als Antriebseinheit ein über einen Umrichter regelbarer Kurzschlußläufermotor vorgesehen ist.

Außerdem ist es erfindungsgemäß, daß die Trennblattklemmvorrichtung einen hydraulisch vorgespannten Zuganker, einen Bajonettverschluß und ein Ventil aufweist.

Eine andere Ausbildung der Erfindung ist, daß als Getriebe ein Kegelradgetriebe vorgesehen ist.

Erfindungsgemäß ist es auch, daß als Getriebe ein Riemengetriebe vorgesehen ist.

Ferner ist vorgesehen, daß eine Entstaubungsanlage, eine wassergefüllte Naßgrobstaubwanne mit Wasserspülung vorgesehen ist.

Eine Ausführung der Erfindung ist dadurch gekennzeichnet, daß vor der Trennschleifmaschine ein oder mehrere einzeln ansteuerbare Niederhalterstempel vorgesehen sind.

Schließlich ist es sinnvoll, daß hinter der Trennschleifmaschine ein oder mehrere Niederhalterbalken vorgesehen sind.

Der Vorteil der Erfindung besteht im wesentlichen darin, daß mit der erfindungsgemäßen Trennschleifmaschine thermisch behandelte hochfeste und verschleißfeste Grobbleche auch von bedeutenden Dimensionen rechtwinklig, gratfrei und längengenau getrennt werden können.

Die Erfindung wird anhand der Zeichnungen näher erläutert.

Es zeigt

Fig. 1    einen senkrechten Schnitt in Richtung der Querachse der Trennschleifmaschine,

Fig. 2    einen senkrechten Schnitt in Richtung der Längsachse der Trennschleifmaschine,

Fig. 3    einen Schnitt durch die Längsachse der Schwinge und

Fig. 4    eine geschnittene Darstellung der Trennblattklemmvorrichtung entlang ihrer Längsachse.

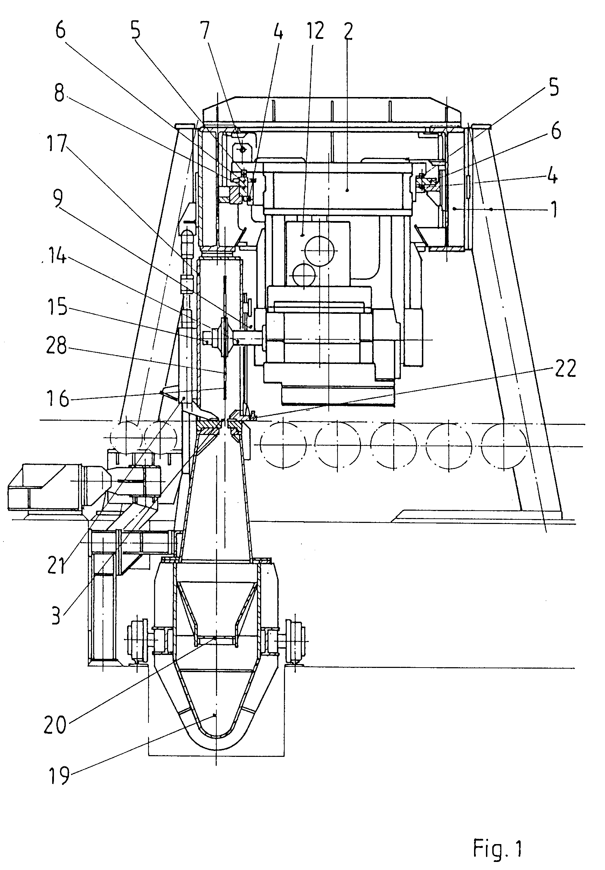

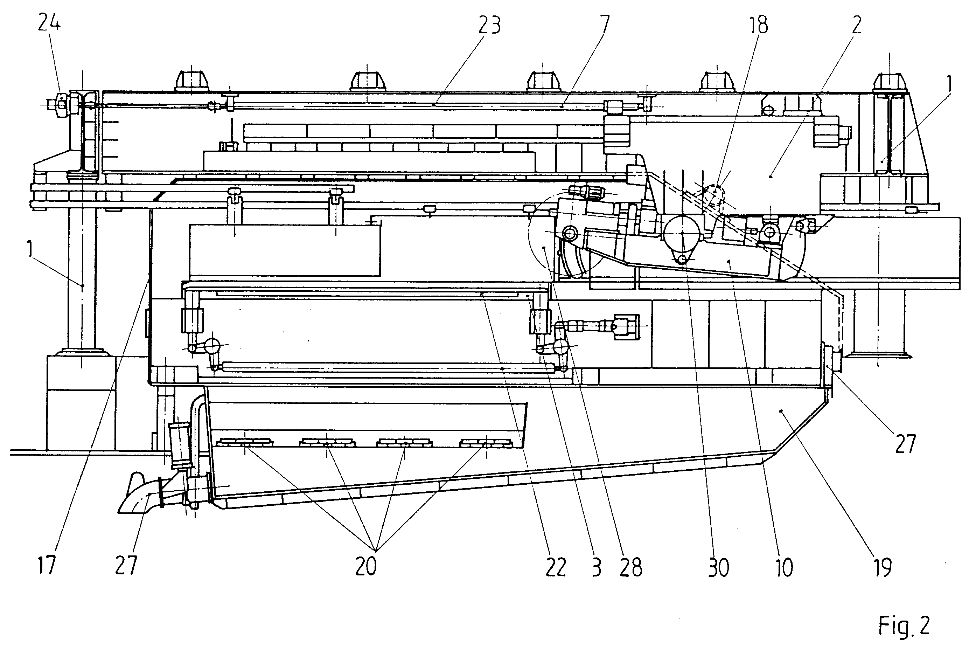

In Fig. 1 und Fig. 2 ist das Trägergerüst mit 1 bezeichnet, das wegen der großen Spannweite zum Erreichen eines schwingungsarmen Betriebs äußerst robust ausgelegt ist. Es ist eine stabile Profil-Schweißkonstruktion aus zwei Längs- und zwei Querträgern. Auf diesem Trägergerüst 1 aufgeschraubt sind zwei gehärtete und geschliffene Stahlleisten, die Längsführungen 6. In den Längsführungen 6 läuft auf über schwenkbare Vorspannkeile 4 spielfrei einstellbaren Rollenumlaufschuhen 5 eine Verfahreinrichtung 2, hier ein Verfahrwagen 2, die durch einen regelbaren Fahrantrieb 7, bestehend aus z. B. einem Radialkolbenmotor 24 mit eingebauter hydraulischer Steuerung, über eine Gewindespindel 23 angetrieben wird. Das Festlager 8 der Verfahreinrichtung 2 ist auf der Trennblattseite 9 der Verfahreinrichtung 2 angeordnet. Dieser Kugelgewindeantrieb 7 ermöglicht ein sehr präzises Verfahren des Verfahrwagens 2, der über dem zu trennenden Material 3 hängend angeordnet ist, da bei extremer Axialsteifigkeit ein leichtgängiger und ruckfreier Mutterlauf erreicht wird.

Zur Erreichung eines guten Schnittergebnisses ist für das Trägergerüst 1 eine verbiegungsfreie Verfahrträgerkonstruktion erforderlich. Dies wird durch eine robuste Profilschweißkonstruktion erreicht. In den aufgeschraubten, gehärteten und geschliffenen Stahlleisten (Längsführungen 6) kann der Verfahrwagen 2 mittels spielfrei einstellbaren Rollenführungen (Rollenumlaufschuhe 5) dann optimal verfahren.

Als Vorrichtungen zum Klemmen 21, 22 des zu trennenden Materials 3, was für einen rechtwinkligen Schnitt äußerst wichtig ist, sind einerseits einzeln ansteuerbare Niederhalterstempel 21 vor der Trennschleifmaschine vorgesehen, von denen bei jedem Schnitt je nach Dimension des zu trennenden Materials 3 mindestens zwei betätigt werden. Der Anpreßdruck der hydraulisch betätigten Niederhalterstempel 21 ist regelbar. Hinter der Trennschleifmaschine ist außerdem ein Niederhalterbalken 22 vorgesehen, dessen Anpreßdruck ebenfalls regelbar ist und der ein Auseinandergehen des zu trennenden Materials verhindern soll. Somit wird durch die beidseitige Klemmung des zu trennenden Materials 3 ein vibrationsarmer Schnitt möglich.

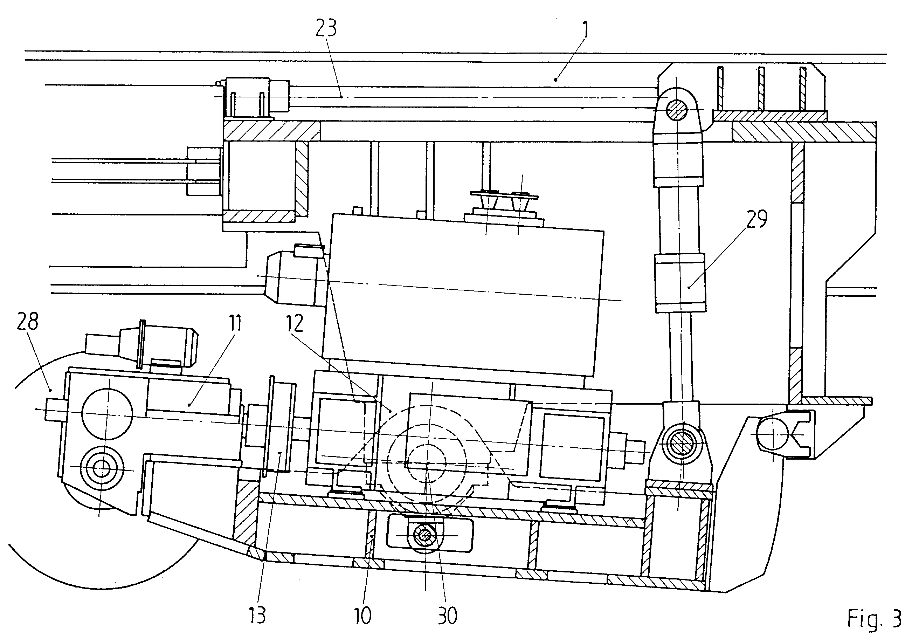

Im Verfahrwagen 2 axial spielfrei gelagert ist die Schneideinheit 16, die aus einer Trennblattabsenkvorrichtung 10, hier einer Schwinge 10, einer Trennblattantriebseinheit 11, 12, 13, die z.B. aus einem Gleichstrommotor 12, einer schwingungsdämpfenden Kupplung 13 und einem Getriebe 11 besteht, sowie dem Trennblatt 28 mit der Trennblattklemmvorrichtung 15 zusammengesetzt ist (Fig. 3). Alle Elemente dieser Schneideinheit 16 müssen so ausgelegt sein, daß möglichst schwingungsarm und präzise gearbeitet werden kann. Die robuste Schwinge 10 wird durch einen Hubzylinder 29 im Verfahrwagen auf- und abbewegt, um in das zu trennende Material 3 ein- oder auszufahren. Sie dreht sich um den Drehpunkt 30. Auf der Schwinge 10 sitzt die Trennblattantriebseinheit 11, 12, 13, die über eine schwingungsdämpfende Kupplung 13 und ein Getriebe 11, das hier ein Kegelradgetriebe ist, aber auch anders geartet sein kann, das auf der Abtriebsseite 14 des Getriebes 11 festgeklemmte Trennblatt 28 antreibt. Wichtig für einen gratfreien Schnitt ist eine konstante Umfangsgeschwindigkeit des Trennblatts 28, die entweder über die Kombination eines über einen Stromrichter regelbaren Gleichstrommotors oder über einen durch einen Umrichter geregelten Kurzschlußläufermotor als Antriebseinheit 12 erreicht wird.

Zur Erzielung eines sauberen gratfreien Schnittes werden auf Rechnerebene (Automatik) in Abhängigkeit von Blechdicke, Blechqualität und Trennschleifscheibentype die Vorschubgeschwindigkeit für den Verfahrwagen 2, in Abhängigkeit der vorgegebenen Zeitspanfläche ($cm^2$/sec), automatisch eingestellt.

Vor dem Anfahren des Verfahrwagens wird durch die im Wagen gelagerte Schwinge 10 ebenfalls automatisch der Trennscheibendurchmesser gemessen und entsprechend der vorgewählten Umfangsgeschwindigkeit (stufenlos einstellbar zwischen 80 und 110 m/sec) die genaue Drehzahl an der Trennscheibe vorgegeben.

Der Verfahrwagen 2 fährt nun mit dem Anfahrsollwert schnell bis an die Blechkante heran, wobei sich der Verfahrweg in Abhängigkeit des Trennscheibendurchmessers verändert und automatisch berechnet wird und geht dann mit dem Schnittsollwert in den Schnitt. Während dem Schnitt wird über eine Blockierüberwachung die Stromgrenze (Überlast) des Hauptantriebsmotors überwacht und folgende Varianten können geschehen:

a) Liegt der gemessene Strom weit unterhalb der max. Stromgrenze, kann zur Erzielung der kurzmöglichsten Schnittzeit die Vorschubgeschwindigkeit erhöht werden, bis der Hauptantriebsmotor kurz unterhalb der max. Stromgrenze arbeitet.

b) Droht durch die vorgegebene Verfahrgeschwindigkeit die Überschreitung der max. Stromgrenze wird automatisch die Vorschubgeschwindigkeit herabgesetzt.

Damit der Verfahrwagen 2 den angestrebten Geschwindigkeitsänderungen ohne Zeitverzögerung folgen kann, war ein spielfreies Verfahrsystem erforderlich. Dies ist nur möglich mit einem Kugelgewindeantrieb 7, bestehend aus einer geschliffenen Kugelspindel und hydraulischem Antrieb mittels Radialkolbenmotor 24.

Vor jedem Schnitt wird die zuvor bereits beschriebene Messung des Trennscheibendurchmessers wiederholt und jeweils die Drehzahl korrigiert.

Dies geschieht über den durch einen Stromrichter regelbaren Gleichstrommotor oder durch einen über Umrichter regelbaren Kurzschlußläufermotor.

Die Drehzahlanpassung der Trennscheibe und damit des Hauptantriebes erfolgt im Verhältnis der Trennscheibenabnutzung in einem großen Drehzahlbereich. Damit die Antriebseinheit 12 nicht im kritischen Drehzahlbereich arbeitet, ist zwischen Getriebe und Antriebsmotor eine spezielle schwingungsdämpfende Kupplung notwendig. Besondere elastische, schwingungsdämpfende Kunststoff-Gummi-Puffer sind dafür erforderlich.

Um das Trennblatt 28 und das zu trennende Material 3 entlang und unterhalb der Trennstelle ist ein Schleifraumschutzkasten 17 mit Entstaubungs-18, 19 und Gratsammelvorrichtungen 20 angeordnet, der so solide sein muß, daß auch ein berstendes Trennblatt 28 durch ihn abgefangen wird. Feinstaub wird aus dem Schleifraumschutzkasten 17 mit einer Entstaubungsanlage 18 abgesaugt. Diese besteht aus Ventilator, Prallabscheider, Filter und Verrohrung (hier nicht dargestellt). Der Grobstaub, der nicht abgesaugt werden kann, fällt in eine unter dem Schleifraumschutzkasten 17 stehende Naßgrobstaubwanne 19. In der mit Wasser gefüllten Naßgrobstaubwanne 19 wird der Grobstaub abgekühlt und sammelt sich an deren Boden, von wo er von Zeit zu Zeit mit Hilfe einer Wasserspülung 27 in ein Sinterbecken ausgespült wird. Zusätzliche Berieselungsanlagen entlang der Wände der Naßgrobstaubwanne 19 können vorgesehen sein. Abfallende Gratstücke fallen auf die Gratstücksammelroste 20, die von Zeit zu Zeit mit einem Kran ausgehoben und geleert werden.

Beim Trennen fallen sowohl Feinstaub, Grobstaub und Grat an. Der Feinstaub wird durch eine Entstaubungsanlage abgesaugt, die an sich bekannt ist.

Für den Grobstaub und den Grat sind - wie beschrieben - besondere Maßnahmen erforderlich. Eine verfahrbare Naßgrobstaubwanne 19 ist unterhalb der Trennmaschinenschutzhaube angeordnet. Sie besteht aus nichtrostendem Stahl und ist mit Gummi ausgekleidet. Weiterhin sorgt ein im oberen Teil der Wanne angeordneter Rost für das Auffangen von langen Gratstreifen.

Die Wanne ist mit Wasser gefüllt und ein permanent in der Schutzhaube laufender Wasservorhang sorgt für Wasserzufuhr.

Der sehr heiße, rot glühende Grobstaub fällt in die Naßgrobstaubwanne 19, wird dort abgekühlt und setzt sich als Schlamm ohne festzubacken auf die Gummiauskleidung. Von Zeit zu Zeit muß die Wanne ausgespült werden. Dazu ist an einem Ende der Wanne ein luftgeschaltetes Quetschventil mit großer Nennweite angeschlossen. Beim Öffnen dieses Quetschventils stürzt das Wasser in einen Abwasserkanal und reißt so den abgelagerten Schlamm mit sich. Durch ein weiteres luftgeschaltetes Ventil kann dann die Wanne mit frischem Wasser durchspült und nach dem Schließen des Quetschventils wieder gefüllt werden.

Zum Entnehmen der längeren Gratstücke mittels Magnetkran und zu zusätzlichen Reinigungsarbeiten kann die Wanne herausgefahren werden.

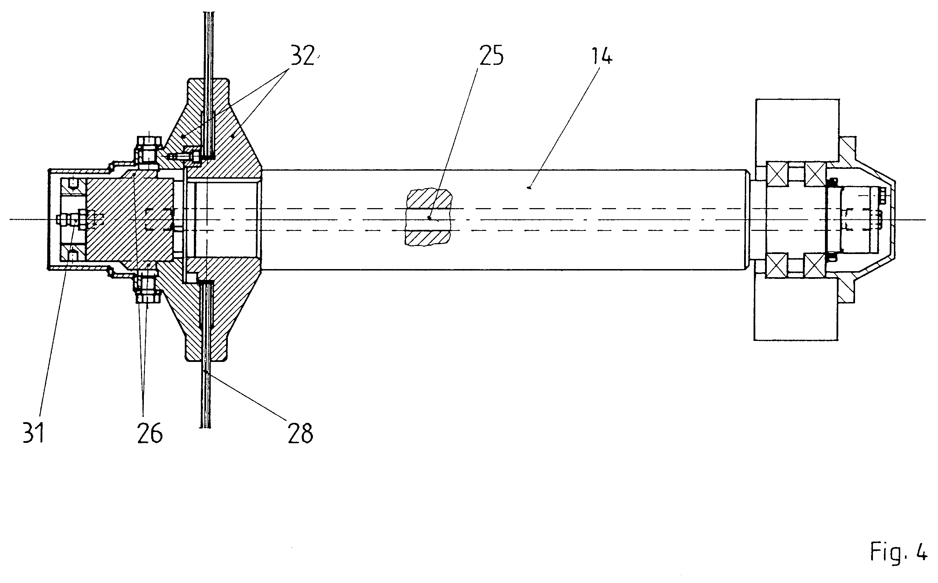

Die Trennblattklemmvorrichtung 15 (Fig. 4) ermöglicht einen Trennblattwechsel binnen zwei bis drei Minuten. Die Abtriebswelle 14 des Getriebes 11 dient gleichzeitig zur Trennblattaufnahme. Ein hydraulisch vorgespannter Zuganker 25, durch die ganze Abtriebswelle 14 gezogen, bewirkt eine sichere Klemmung der Trennscheibe 28, die in einem Spannteller 32 sitzt. Das einzige Werkzeug, das zum Wechseln der Trennscheibe 28 benötigt wird, ist eine hydraulische Handpumpe, die so ausgelegt ist, daß wenige Hubbewegungen genügen, um durch das Ventil 31 den notwendigen Druck zu erzeugen, um den Zuganker 25 zu längen und danach den Bajonettverschluß 26 zu lösen.

Das zu trennende Material 3 wird in bekannter Weise auf Rollgängen befördert.

**Patentansprüche**

1. Trennschleifmaschine zum Trennen von Blechen, **dadurch gekennzeichnet,** daß in einem Trägergerüst (1) eine Verfahreinrichtung (2) über dem zu trennenden Material (3) hängend, in spielfrei einstellbaren Längsführungen (4, 5, 6) laufend und über einen regelbaren Fahrantrieb (7) antreibbar vorgesehen ist, daß die Verfahreinrichtung (2) eine Trennblattabsenkvorrichtung (10) aufweist, auf der eine regelbare Trennblattantriebseinheit (11, 12, 13) vorgesehen ist, daß auf der Abtriebswelle (14) der Trennblattantriebseinheit (11, 12, 13) eine Trennblattklemmvorrichtung (15) angeordnet ist, daß ein das Trennblatt (28) und das zu trennende Material (3) entlang und unterhalb der Trennstelle umfassender Schleifraumschutzkasten (17) mit Entstaubungs- (18, 19) und Gratsammelvorrichtungen (20) vorhanden ist, und daß Vorrichtungen zum Klemmen (21, 22) des zu trennenden Materials (3) vorgesehen sind.

2. Trennschleifmaschine zum Trennen von Blechen, **dadurch gekennzeichnet,** daß in einem schwingungsarmen Trägergerüst (1) ein Verfahrwagen (2) über dem zu trennenden Material (3) hängend, mit über schwenkbare Vorspannkeile (4) spielfrei einstellbaren Rollenumlaufschuhen (5) in gehärteten und geschliffenen Längsführungen (6) laufend und über einen Kugelgewindeantrieb (7) antreibbar angeordnet ist, wobei das Festlager (8) auf der Trennblattseite (9) angeordnet ist, daß der Verfahrwagen (2) eine spielfrei gelagerte Schwinge (10) aufweist, auf der eine mit einem Getriebe (11) verbundene Antriebseinheit (12) mit einer schwingungsdämpfenden Kupplung (13) vorgesehen ist, daß auf der Abtriebswelle (14) des Getriebes (11) eine Trennblattklemmvorrichtung (15) angeordnet ist, daß ein das Trennblatt (28) und das zu trennende Material (3) entlang und unterhalb der Trennstelle umfassender Schleifraumschutzkasten (17) mit Entstaubungsvorrichtungen (18, 19) und aushebbaren Gratstücksammelrosten (20) vorhanden ist, und daß Vorrichtungen (21, 22) zum Niederhalten des zu trennenden Materials (3) vorgesehen sind.

3. Trennschleifmaschine nach Anspruch 1, **dadurch gekennzeichnet,** daß die Kugelspindel des Kugelgewindeantriebs (7) mit einem Radialkolbenmotor mit hydraulischer Steuerung (24) antreibbar ist.

4. Trennschleifmaschine nach Anspruch 1, **dadurch gekennzeichnet,** daß als Antriebseinheit (12) ein über einen Stromrichter regelbarer Gleichstrommotor vorgesehen ist.

5. Trennschleifmaschine nach Anspruch 1, **dadurch gekennzeichnet,** daß als Antriebseinheit (12) ein über einen Umrichter regelbarer Kurzschlußläufermotor vorgesehen ist.

6. Trennschleifmaschine nach Anspruch 1, **dadurch gekennzeichnet,** daß die Trennblattklemmvorrichtung (15) einen hydraulisch vorgespannten Zuganker (25), einen Bajonettverschluß (26) und ein Ventil (31) aufweist.

7. Trennschleifmaschine nach Anspruch 1, **dadurch gekennzeichnet,** daß als Getriebe (11) ein Kegelradgetriebe vorgesehen ist.

8. Trennschleifmaschine nach Anspruch 1, **dadurch gekennzeichnet,** daß als Getriebe (11) ein Riemengetriebe vorgesehen ist.

9. Trennschleifmaschine nach Anspruch 1, **dadurch gekennzeichnet,** daß eine Entstaubungsanlage (18), eine wassergefüllte Naßgrobstaubwanne (19) mit Wasserspülung (27) vorgesehen ist.

10. Trennschleifmaschine nach Anspruch 1, **dadurch gekennzeichnet,** daß vor der Trennschleifmaschine ein oder mehrere einzeln ansteuerbare Niederhalterstempel (21) vorgesehen sind.

11. Trennschleifmaschine nach Anspruch 1, **dadurch gekennzeichnet,** daß hinter der Trennschleifmaschine ein oder mehrere Niederhalterbalken (22) vorgesehen sind.

Fig. 1

Fig. 2

EP 0 507 219 A2

Fig. 3

Fig. 4